# EUROPEAN PATENT SPECIFICATION

(11) **EP 4 556 886 B1**
(45) Date of publication and mention of the grant of the patent: **02.12.2026**
(21) Application number: 23839102.3
(22) Date of filing: 10.07.2023
(51) Int. Cl.: G01N 15/08, A62B 27/00, G01N 7/10

(54) **DEVICE FOR MEASURING THE FILTRATION EFFICIENCY OF A MASK**
VORRICHTUNG ZUR MESSUNG DER FILTRATIONSEFFIZIENZ EINER MASKE
DISPOSITIF DE MESURE DE L'EFFICACITÉ DE FILTRATION D'UN MASQUE

(30) Priority: 11.07.2022 ES 202231166 U
(43) Date of publication of application: 21.05.2025
(73) Proprietor: Texcon y Calidad, S.L., 45694 Toledo (ES); Universidad Politécnica de Madrid, 28040 Madrid (ES)
(72) Inventor: BENITO PEINADO, Pedro José, 28040 Madrid (ES); MURUA MURO, Pedro Maria, 48950 Vizcaya (ES); MURUA PICCHI, Jesús, 48950 Vizcaya (ES)
(74) Representative: Elzaburu S.L.P.
(86) International application number: PCT/ES2023/070441
(87) International publication number: WO 2024/013418

(56) References cited:
- CN-A- 112 161 895
- CN-U- 214 097 072
- CN-U- 215 263 011
- FR-A- 851 907
- JP-A- S58 182 539
- US-A1- 2011 138 884
- US-A1- 2018 209 890
- RENGASAMY SAMY ET AL: "Nanoparticle Penetration through Filter Media and Leakage through Face Seal Interface of N95 Filtering Facepiece Respirators", THE ANNALS OF OCCUPATIONAL HYGIENE OCT 2008 LNKD- PUBMED:18678881, vol. 56, no. 5, 1 July 2012 (2012-07-01), pages 568 - 580, XP093129822, ISSN: 1475-3162, Retrieved from the Internet <URL:https://watermark.silverchair.com/mer122.pdf?token=AQECAHi208BE49Ooan9kkhW_Ercy7Dm3ZL_9Cf3qfKAc485ysgAAA2kwggNlBgkqhkiG9w0BBwagggNWMIIDUgIBADCCA0sGCSqGSIb3DQEHATAeBglghkgBZQMEAS4wEQQMimZJbcLTNUmTC-ULAgEQgIIDHIfGfbyKb7xg5Wh0VosSf4hXY_sGgoCMF3yj7uBNUhsQyTzy-6DzM7VRSa9x0cDrZ3uNe1WoEraM1o34JQCo7zQDQApKI> [retrieved on 20260724], DOI: 10.1093/annhyg/mer122
- DONAL SHEETS ET AL: "An apparatus for nondestructive and rapid comparison of mask approaches in defense against infected respiratory aerosols", ARXIV.ORG CORNELL UNIVERSITY LIBRARY, 201 OLIN LIBRARY CORNELL UNIVERSITY ITHACA, NY 14853, 3 June 2020 (2020-06-03), XP081691211
- HUO SHIGAO ET AL: "Ventilation of ordinary face masks", BUILDING AND ENVIRONMENT PERGAMON PRESS, OXFORD, GB, vol. 205, 16 August 2021 (2021-08-16), XP086786587, ISSN: 0360-1323, [retrieved on 20210816], DOI: 10.1016/J.BUILDENV.2021.108261
- RENGASAMY SAMY, EIMER BENJAMIN C: "Nanoparticle Penetration through Filter Media and Leakage through Face Seal Interface of N95 Filtering Facepiece Respirators", THE ANNALS OF OCCUPATIONAL HYGIENE OCT 2008 LNKD- PUBMED:18678881, vol. 56, no. 5, 1 July 2012 (2012-07-01), pages 568 - 580, XP093129822, ISSN: 1475-3162, DOI: 10.1093/annhyg/mer122
- LOUIS B., LEROUX K., ISABEY D., FAUROUX B., LOFASO F.: "Effect of manufacturer-inserted mask leaks on ventilator performance", EUROPEAN RESPIRATORY JOURNAL, EUROPEAN RESPIRATORY SOCIETY, GB, vol. 35, no. 3, 1 March 2010 (2010-03-01), GB , pages 627 - 636, XP093129825, ISSN: 0903-1936, DOI: 10.1183/09031936.00188708
- HUO SHIGAO ET AL.: "Ventilation of ordinary face masks", BUILDING AND ENVIRONMENT., vol. 205, 16 August 2021 (2021-08-16), pages 108261, XP086786587, ISSN: 0360-1323, DOI: 10.1016/j.buildenv.2021.108261

## Description

### Purpose of the invention

The present invention relates to a device for measuring the filtration efficiency of a mask, which allows measuring the real filtration efficiency of the mask and not only the filtration efficiency of the fabric or material that forms the mask.

By means of the device for measuring the filtration efficiency of a mask object of the present invention, mask manufacturers can calculate the real bacterial filtration efficiency of a mask, which is always significantly lower than the theoretical efficiency.

The device for measuring the filtration efficiency of a mask object of the present invention has special application in the textile industry and the industry dedicated to the manufacture of masks, as well as the industry dedicated to certifying the degree of filtration offered by a mask.

### Background of the invention and technical problem to be solved

The health crisis due to the Covid 19 pandemic has highlighted the importance of having personal protective equipment (PPE) that offers a high degree of protection against the risk of contagion.

It is particularly important to have masks that cover the nose and mouth and that allow the user wearing the mask to breathe relatively normally and ensure a degree of bacterial filtration that prevents them from inhaling (through the nose or mouth) particles that comprise pathogens (bacteria or viruses).

As is known, when a user purchases a mask, the packaging of the mask and/or the surface of the mask itself usually comprises an indication of the bacterial filtration efficiency (BFE) of said mask. Thus, when a user purchases a mask (for example, of the FFP2 type, or any other type of mask), it is common to observe an indication that expresses BFE > 95%. This indication may lead the user of the mask to mistakenly think that, when wearing said mask, more than 95% of the pathogens present in the air particles will not be breathed in or inhaled by said user.

However, the indication of bacterial filtration efficiency (BFE), refers to the filtration efficiency of the fabric that forms the mask (generally a non-woven fabric, made of plastic material (for example, polypropylene (PP)), manufactured using the technique known as *meltblown*)*,* when it is analysed in laboratory conditions where a stream of air with particles is passed through, measuring the density of particles before and after passing through the mask fabric, and where all the air flow incident on a face of the fabric passes through said fabric.

Thus, the laboratory conditions to measure the bacterial filtration efficiency (BFE) of the mask fabric far from coincide with the conditions of use of a mask formed by the same fabric and that is worn by a user with a specific facial anatomy and that is usually in permanent movement. The misalignments between the mask and the user's face, as well as the pressure existing in the cavity between the mouth and the mask caused by the resistance of the mask material to the passage of respiratory air (differential pressure), cause openings to be generated between the edge of the mask and the skin of the user's face, with an air stream of both inspiration and expiration circulating through said openings. Of course, the air stream circulating through said openings does not undergo any filtration process.

Therefore, it can be said that the BFE indication that accompanies a mask refers to a theoretical BFE, which does not approximate the real bacterial filtration efficiency (R-BFE) of said mask being worn by a user with a specific facial anatomy and under specific environmental and movement conditions.

Document US 2011/138884 A1. This document discloses an apparatus for testing a protective mask, the apparatus including a testing unit for testing a protective mask, the testing unit further including a headform upon which a protective mask to be tested is mounted.

Document FR 851 907 A is further known from the prior art. This document discloses a test head for checking gas masks, this test head being adaptable to all sizes and models of masks.

### Description of the invention

In order to remedy the aforementioned drawbacks, the present invention relates to a device for measuring the filtration efficiency of a mask.

The device for measuring the filtration efficiency of a mask object of the present invention comprises:
- a manikin (or bust) shaped like a human head;
- an enveloping surface (a surgical hood, urn, or bag) impermeable to the air surrounding the manikin;
- pumping means connected through a first air duct with a front (or preferably front) position of the manikin located in correspondence with a mouth of the manikin, wherein the pumping means is configured to produce an inspiration and/or expiration air stream through the first air duct;
- a first flow sensor, configured to measure the flow of the inspiration and/or expiration air stream produced by the pumping means;
- at least one first opening of the enveloping surface, configured to allow the passage of air between the outside of the enveloping surface and the inner space located between the enveloping surface and the manikin, and;
- a mask positioning means in correspondence with the front position of the manikin configured to position the mask in correspondence with the front position of the manikin without producing a seal between the mask and the manikin.

Novelly, the device for measuring the filtration efficiency of a mask, object of the present invention, further comprises:
- a second air duct configured to be connected with the mask in correspondence with an outer surface of the mask opposite to the manikin by a coupling means, wherein the coupling means is impermeable to air and is configured to be sealed to a perimeter flange of the outer surface of the mask and to be sealed to an outer surface of the second air duct located in correspondence with a first end of the second air duct, the coupling means generating a cavity between the mask, the coupling means and an air inlet located in correspondence with the first end of the second air duct;
- a second flow sensor connected to the second air duct and configured to measure the flow of inspiration and/or expiration air that is filtered by the mask, and;
- a means of calculating a filtration coefficient (Ke) by dividing the flow of inspiration and/or expiration air that is filtered by the mask by the flow of the inspiration and/or expiration air stream produced by the pumping means.

By means of the device for measuring the filtration efficiency of a mask described above, it is possible to obtain a coefficient of effectiveness (Ke) value that indicates the percentage (expressed as a decimal) of inspired or expired air that has actually been filtered by the mask, since an important part of the inspired and expired air escapes between the openings or gaps that appear during breathing between the mask and the surface of the front position of the manikin.

This coefficient of efficiency value, Ke, can be multiplied by the bacterial filtration efficiency (BFE) of the fabric that forms the mask, resulting in a real bacterial filtration efficiency (R-BFE) of the mask when used by a person in their daily activity.

The calculation means are preferably configured to calculate the filtration coefficient (Ke) by dividing the flow of inspiration and/or expiration air that is filtered by the mask by the flow of the inspiration and/or expiration air stream produced by the pumping means.

Preferably, the filtration efficiency measuring device of a mask further comprises a third flow sensor configured to measure the flow of air flowing through the first opening of the enveloping surface. In this way it can be checked if the sum of flows measured by the second sensor and the third sensor equals the flow measured by the first sensor. In the event it does not coincide, the device can emit an alarm or warning signal, so that the operator in charge of using the machine checks if there is any air leakage in the enveloping surface or if there is any fault in the flow sensors.

According to a possible embodiment of the device, the coupling means between the mask and the second air duct comprise a film of air-impermeable material. This film can be made of plastic material.

As already mentioned, the enveloping surface may consist of a surgical hood or urn.

The device may comprise a support of the second air duct in said surgical hood or urn (e.g. in correspondence with a second opening wherethrough the air circulating in the second air duct flows between the space outside the surgical hood or urn and the space inside the surgical hood or urn). Said support of the second air duct in the surgical hood or urn is located at the height of the front position (the mouth) of the manikin. In this way, when the mask is connected by means of the coupling means to the second air duct, the mask is positioned in correspondence with the front position of the manikin, located in correspondence with the mouth of the manikin.

Preferably, the pumping means is adjustably configured to be able to vary the flow and the frequency of inspiration and expiration. In this way, the operator in charge of operating the device can configure the pumping means to simulate a breathing rhythm according to a certain level of physical activity.

Preferably, the pumping means can be regulated according to at least four breathing rhythms corresponding to a level of rest or a level of light (or gentle) physical exercise, a level of moderate physical exercise and a level of intense physical exercise.

Preferably, the device comprises an air pressure gauge located in correspondence with an orifice of the first air duct. In this way, the pressure generated in the entire first air duct can be measured, this pressure being related to the resistance to the passage of air offered by each mask, providing an additional parameter indicative of the respiratory effort that the use of the mask entails for a person in their daily activity.

The present invention also relates to a method for measuring the filtration efficiency of a mask.

This measurement method involves making use of a filtration efficiency measurement device of a mask as described above.

The method comprises obtaining a filtration efficiency coefficient (Ke) of the mask, dividing the inspiration and/or expiration air flow filtered by the mask by the total inspiration and/or expiration air flow.

Preferably, the method also comprises multiplying the filtration efficiency coefficient, Ke, by a theoretical value of bacterial filtration efficiency of the mask (corresponding to the bacterial filtration efficiency (BFE) of the mask fabric), to thereby obtain a real bacterial filtration efficiency (R-BFE) of the mask.

### Brief description of the figures

A figure is briefly described here by way of non-limiting example, which helps to better understand the invention:
Figure 1: Shows a schematic view of a possible embodiment of the device for measuring the filtration efficiency of a mask object of the present invention.
Figure 2: It shows a detail, according to a possible embodiment of the device for measuring the filtration efficiency of a mask of the invention, of the coupling between the second air duct (collector pipe) and the mask, the mask being arranged on the manikin in the shape of a human head of the device.

### Detailed description

The present invention relates, as mentioned above, to a device for measuring the filtration efficiency of a mask (1).

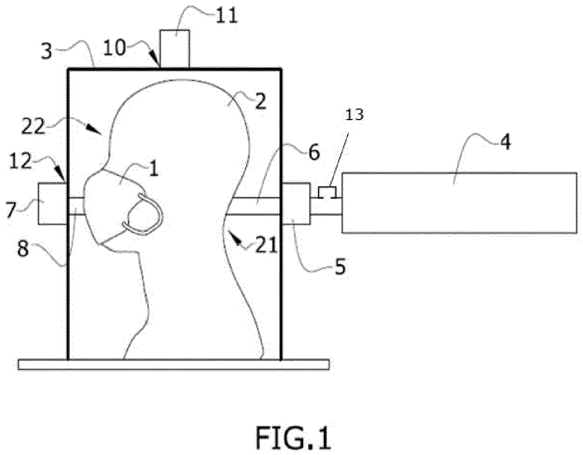

Figure 1 shows a schematic representation of a possible embodiment of the device for measuring the filtration efficiency of a mask (1), object of the present invention.

The device comprises a manikin (2) in the form of a human head, arranged inside a surgical hood, urn or enveloping surface (3) impermeable to the passage of air.

The device comprises a pumping means (4) configured to generate a flow of inspiration and expiration air that circulates through the manikin (2).

This pumping means (4) may comprise a calibration pump.

The pumping means (4) is preferably located outside the surgical hood or urn (3).

The pumping means (4) may be configured to pump an air flow at an adjustable rate, such that the pumping means (4) may generate an inspiration/expiration air flow in accordance with a rhythm of intense physical exercise, or in accordance with a rhythm of moderate physical exercise, or in accordance with a rhythm of light physical exercise, or a rhythm or level of rest.

At the outlet of the pumping means (4), the device comprises a first air flow sensor (5), configured to measure the flow of air inspired and/or expired by the manikin (2).

The device comprises a first air duct (6) (for example, a PVC tube) that is connected to the pumping means (4) and that traverses the inside of the manikin (2) from a rear position (21) (in correspondence with the neck of the manikin (2)) to a front position (22) (in correspondence with the mouth of the manikin (2)).

Preferably, the device incorporates an air pressure gauge (13) connected to an orifice made in the first air duct (6). In this way, the pressure generated throughout the tube or first air duct (6), which is related to the resistance to the passage of air offered by each mask, can be measured.

The device comprises a mask (1) positioned on the manikin (2), in correspondence with the front position (22) of the manikin (2).

The device comprises a second air duct (8) (for example, a PVC tube) configured to be connected to the mask (1) through coupling means (9).

The device comprises a second air flow sensor (7), configured to measure a flow of air that passes through the mask (1) and circulates through the second air duct (8).

The surgical hood, urn or enveloping surface (3) comprises a first opening (10) or valve, typically located in correspondence with the top or ceiling of the surgical hood or urn (3).

The device comprises a third air flow sensor (11), configured to measure the air entering or leaving the surgical hood, urn or enveloping surface (3) through the first opening (10).

The surgical hood, urn or enveloping surface (3) comprises a second opening (12) wherethrough the second air duct (8) is connected to the outside of the surgical hood, urn or enveloping surface (3).

The device allows a mask (1) to be arranged on the manikin (2), preferably using the harnesses or webbing of the mask (1) to attach the mask (1) to the manikin (2) (for example, by attaching the flexible straps or harnesses or webbing of the mask (1) to the ears of the manikin (2)). Thus, the mask (1) is positioned in correspondence with the front position (22) of the manikin (2), by means of positioning means (which can be the harnesses or webbing or conventional flexible straps of the mask, or can be alternative positioning means that allow the mask (1) to be disposed in correspondence with the front position (22) of the manikin (2)).

Thus, once the mask (1) is connected to the second air duct (8) by means of the coupling means (9), it is sufficient to place the mask (1) in proximity to the front position (22) of the manikin (2), preferably in contact with the surface of the manikin (2) but without completely sealing the mask (1) to the surface of the front position (22) of the manikin (2). That is, the adjustment of the mask (1) to the manikin (2) must allow, under sufficient respiratory pressure (pressure generated by the pumping means (4), which causes the mask (1) to deform over the front position (22) of the manikin (2)), air to escape between the interstices, misalignments or openings that should be able to form between the mask (1) and the surface of the manikin (2), just as they are formed between the mask (1) and the face of a person when they wear the mask (1).

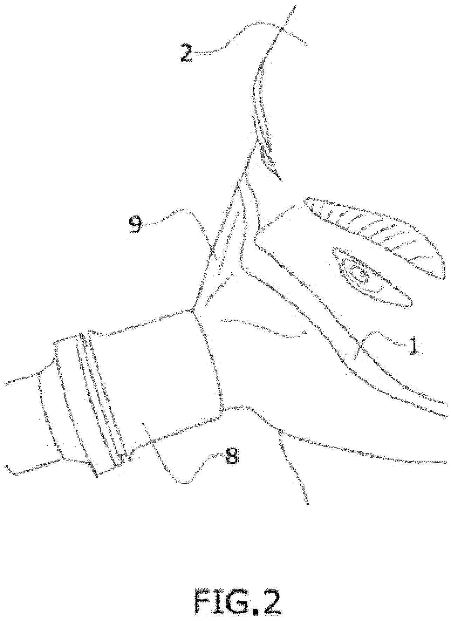

Figure 2 shows a detail, according to a possible embodiment of the device of the invention, of the mask (1) connected to the second air duct (8) (or collector pipe) by means of the coupling means (9).

The coupling means (9) may comprise a film impermeable to the passage of air (e.g. a plastic film).

According to the invention, these coupling means (9) is configured to seal to an outer surface of the second air duct (8) located in correspondence with a first end of said second air duct (8). Likewise, this coupling means (9) is configured to be sealed to the perimeter rim of the mask (1) located in correspondence with an outer surface of the mask (1) (the outer surface of the mask (1) being that surface of the mask (1) located in opposition to the manikin (2), in contrast to the inner surface of the mask (1) which is the one that is in contact with and/or faces the front position (22) of the manikin (2)).

Thus, the device for measuring the filtration efficiency of a mask (1), object of the present invention, allows the passage of air between the manikin (2) and the mask (1), but does not allow the passage of air through the coupling means (9), so that all the air that passes through the mask (1) also flows through the second air duct (8) and through the second sensor (7).

In operation, the pumping means (4) generates an inspiration and expiration air flow, according to a certain regime or rhythm of intense, moderate, or gentle (light) physical exercise or rest, equivalent to the breathing rhythm of a person.

This pumping means (4) is adjustable, so that the frequency and rate of flow of the pumped air flow can be adjusted, according to the mentioned operating rhythms or regimes.

The expired air flow rate flows from the pumping means (4) through the first air duct (6), towards the mouth of the manikin (2) located in correspondence with the front position (22) of the manikin (2).

A portion of the outgoing air from the manikin (2) (expired air) passes through the mask (1) and flows through the second air duct (8) to the outside of the surgical hood, urn or enveloping surface (3).

Another portion of the outgoing air of the manikin (2) (expired air) leaks through the spaces or openings between the mask (1) and the front surface of the manikin (2) (surface located in correspondence with the front position (22) of the manikin (2)). This portion of air that leaks between the manikin (2) and the mask (1) escapes from the surgical hood, urn or enveloping surface (3) through the first opening (10).

Similarly to what has just been described, a portion of the air flow entering the manikin (2) (inspired air) flows from the outside of the surgical hood, urn or enveloping surface (3) through the second air duct (8) and through the mask (1) towards the mouth of the manikin (2) located in correspondence with the front position (22) of the manikin (2) and, finally, towards the pumping means (4) through the first air duct (6).

Another portion of the incoming air flow in the manikin (2) (inspired air) flows from the outside of the surgical hood, urn or enveloping surface (3) through the first opening (10) and through the misalignments or gaps (which are formed by the respiratory pressure that deforms the mask (1)) between the mask (1) and the front position of the manikin (2), towards the mouth of the manikin (2) located in correspondence with the front position (22) of the manikin (2) and, finally, towards the pumping means (4) through the first air duct (6).

The first sensor (5) measures the total flow of inspired and expired air.

The second sensor (7) measures the inspired and expired flow that filters through the mask (1).

The third sensor (11) measures the flow of inspired and expired air that does not filter through the mask.

Preferably, the device comprises verification or checking means configured to compare the sum of flows measured by the second sensor (7) and by the third sensor (11) with the flow measured by the first sensor (5), being able to issue a warning signal if the sum of flows measured by the second sensor (7) and by the third sensor (11) is not equal to the flow measured by the first sensor (5).

The device may comprise means for calculating a coefficient of effectiveness (Ke) of the mask (1), where said coefficient of effectiveness, Ke, is equivalent to a percentage (expressed in decimals) of the inspired or expired air that has passed through the mask (1).

The coefficient of efficiency, Ke, is obtained by dividing the flow of air filtered by the mask (1) (measured by the second sensor (7)) by the total flow of inspired or expired air (measured by the first sensor (5)).

## Claims

1. Device for measuring the filtration efficiency of a mask (1) comprising:
- a manikin (2) in the shape of a human head;
- an air-impermeable enveloping surface (3) surrounding the manikin (2);
- pumping means (4) connected through a first air duct (6) with a front position (22) of the manikin (2) located in correspondence with a mouth of the manikin (2), where the pumping means (4) is configured to produce an inspiration and/or expiration air stream through the first air duct (6);
- a first flow sensor (5), configured to measure the flow of the inspiration and/or expiration air stream produced by the pumping means (4);
- at least one first opening (10) of the enveloping surface, configured to allow the passage of air between the outside of the enveloping surface (3) and the inner space located between the enveloping surface (3) and the manikin (2);
- a means for positioning a mask (1) in correspondence with the front position (22) of the manikin (2), configured to position the mask (1) in correspondence with the front position (22) of the manikin (2) without producing an airtight seal between the mask (1) and the manikin (2);
and further comprising:
- a second air duct (8) configured to be connected to the mask (1) in correspondence with an outer surface of the mask (1) opposite the manikin (2) by means of coupling means (9), wherein the coupling means (9) is impermeable to air and is configured to be sealed to a perimeter rim of the outer surface of the mask (1) and to an outer surface of the second air duct (8) located in correspondence with a first end of the second air duct (8), the coupling means (9) generating a cavity between the mask (1), the coupling means (9) and an air inlet located in correspondence with the first end of the second air duct (8);
- a second flow sensor (7) connected to the second air duct (8) and configured to measure the flow of inspiration and/or expiration air that is filtered by the mask (1), and;
- calculation means configured to calculate a filtration coefficient (Ke).

2. Device for measuring the filtration efficiency of a mask (1) according to claim 1, wherein the calculation means are configured to calculate the filtration coefficient (Ke) by dividing the flow of inspiration and/or expiration air that is filtered by the mask by the flow of the inspiration and/or expiration air stream produced by the pumping means.

3. Device for measuring the filtration efficiency of a mask (1) according to claim 1 or 2, wherein it comprises a third flow sensor (11) configured to measure the flow of air flowing through the first opening (10) of the enveloping surface (3).

4. Device for measuring the filtration efficiency of a mask (1) according to any of the preceding claims, wherein the coupling means (9) comprises a film of air-impermeable material.

5. Device for measuring the filtration efficiency of a mask (1) according to any of the preceding claims, wherein the enveloping surface (3) is a surgical hood or urn.

6. Device for measuring the filtration efficiency of a mask (1) according to claim 5, wherein it comprises a support of the second air duct (8) on the enveloping surface (3).

7. Device for measuring the filtration efficiency of a mask (1) according to any of the preceding claims, wherein the pumping means (4) is adjustably configured to be able to vary the flow rate and the frequency of inspiration and expiration.

8. Device for measuring the filtration efficiency of a mask (1) according to claim 7, wherein the pumping means (4) can be regulated according to at least four breathing rhythms corresponding to a level of rest, a level of light physical exercise, a level of moderate physical exercise and a level of intense physical exercise.

9. Device for measuring the filtration efficiency of a mask (1) according to any of the preceding claims, wherein it comprises an air pressure gauge (13) located in correspondence with an orifice of the first air duct (6).

## Patentansprüche

1. Vorrichtung zum Messen der Filtrationseffizienz einer Maske (1), umfassend:
- eine Prüfpuppe (2) in Form eines menschlichen Kopfes;
- eine luftundurchlässige Hüllfläche (3), die Prüfpuppe (2) umgibt;
- eine Pumpvorrichtung (4), die durch einen ersten Luftkanal (6) mit einer vorderen Position (22) der Prüfpuppe (2) verbunden ist, die mit einem Mund der Prüfpuppe (2) übereinstimmt, wobei die Pumpvorrichtung (4) so konfiguriert ist, dass sie einen Inspirations- und/oder Expirationsluftstrom durch den ersten Luftkanal (6) erzeugt;
- einen ersten Durchflusssensor (5), der so konfiguriert ist, dass er den Durchfluss des Inspirations- und/oder Expirationsluftstroms, der durch die Pumpvorrichtung (4) erzeugt wird, misst;
- mindestens eine erste Öffnung (10) der Hüllfläche, die so konfiguriert ist, dass sie den Luftdurchtritt zwischen der Außenseite der Hüllfläche (3) und dem Innenraum, der sich zwischen der Hüllfläche (3) und der Prüfpuppe (2) befindet, ermöglicht;
- eine Vorrichtung zum Positionieren einer Maske (1) im Bereich der vorderen Position (22) der Prüfpuppe (2), die so konfiguriert ist, dass sie die Maske (1) im Bereich der vorderen Position (22) der Prüfpuppe (2) positioniert, ohne eine luftdichte Abdichtung zwischen der Maske (1) und der Prüfpuppe (2) herzustellen;
und ferner umfassend:
- einen zweiten Luftkanal (8), der so konfiguriert ist, dass er im Bereich einer von der Prüfpuppe (2) abgewandten Außenfläche der Maske (1) mittels eines Kopplungsmittels (9) mit der Maske (1) verbunden werden kann, wobei das Kopplungsmittel (9) luftundurchlässig und so konfiguriert ist, dass es an einem Umfangsrand der Außenfläche der Maske (1) und an einer Außenfläche des zweiten Luftkanals (8), die sich im Bereich eines ersten Endes des zweiten Luftkanals (8) befindet, luftdicht befestigt werden kann, wobei das Kopplungsmittel (9) einen Hohlraum zwischen der Maske (1), dem Kopplungsmittel (9) und einem Lufteinlass, der sich im Bereich des ersten Endes des zweiten Luftkanals (8) befindet, erzeugt;
- einen zweiten Durchflusssensor (7), der mit dem zweiten Luftkanal (8) verbunden und so konfiguriert ist, dass er den Durchfluss der Inspirations- und/oder Expirationsluft misst, der von der Maske (1) gefiltert wird, und;
- Berechnungsmittel, das zum Berechnen eines Filtrationskoeffizienten (Ke) konfiguriert ist.

2. Vorrichtung zum Messen der Filtrationseffizienz einer Maske (1) nach Anspruch 1, wobei das Berechnungsmittel so konfiguriert ist, dass es den Filtrationskoeffizienten (Ke) berechnet, indem es den Durchfluss der durch die Maske gefilterten Inspirations- und/oder Expirationsluft durch den Durchfluss des von der Pumpvorrichtung erzeugten Inspirations- und/oder Expirationsluftstroms teilt.

3. Vorrichtung zum Messen der Filtrationseffizienz einer Maske (1) nach Anspruch 1, wobei sie einen dritten Durchflusssensor (11) umfasst, der so konfiguriert ist, dass er den durch die erste Öffnung (10) der Hüllfläche (3) strömenden Luftstrom misst.

4. Vorrichtung zum Messen der Filtrationseffizienz einer Maske (1) nach einem der vorhergehenden Ansprüche, wobei das Kopplungsmittel (9) eine Folie aus luftundurchlässigem Material umfasst.

5. Vorrichtung zum Messen der Filtrationseffizienz einer Maske (1) nach einem der vorhergehenden Ansprüche, wobei die Hüllfläche (3) eine chirurgische Haube oder ein Behälter ist.

6. Vorrichtung zum Messen der Filtrationseffizienz einer Maske (1) nach Anspruch 5, wobei sie eine Halterung für den zweiten Luftkanal (8) an der Hüllfläche (3) umfasst.

7. Vorrichtung zum Messen der Filtrationseffizienz einer Maske (1) nach einem der vorhergehenden Ansprüche, wobei die Pumpvorrichtung (4) einstellbar konfiguriert ist, um die Durchflussrate und die Inspirations- und Expirationsfrequenz variieren zu können.

8. Vorrichtung zum Messen der Filtrationseffizienz einer Maske (1) nach Anspruch 7, wobei die Pumpvorrichtung (4) gemäß mindestens vier Atemrhythmen reguliert werden kann, die einem Ruhezustand, einem Zustand leichter körperlicher Betätigung, einem Zustand mäßiger körperlicher Betätigung und einem Zustand intensiver körperlicher Betätigung entsprechen.

9. Vorrichtung zum Messen der Filtrationseffizienz einer Maske (1) nach einem der vorhergehenden Ansprüche, wobei sie ein Luftdruckmessgerät (13) umfasst, das im Bereich einer Öffnung des ersten Luftkanals (6) angeordnet ist.

## Revendications

1. Dispositif de mesure de l'efficacité de filtration d'un masque (1) comprenant :
- un mannequin (2) en forme de tête humaine ;
- une surface enveloppante (3) imperméable à l'air entourant le mannequin (2) ;
- un moyen de pompage (4) relié par un premier conduit d'air (6) avec une position avant (22) du mannequin (2) située en correspondance avec une bouche du mannequin (2), le moyen de pompage (4) étant configuré pour produire un flux d'air d'inspiration et/ou d'expiration à travers le premier conduit d'air (6) ;
- un premier capteur de débit (5), configuré pour mesurer le débit du flux d'air d'inspiration et/ou d'expiration produit par le moyen de pompage (4) ;
- au moins une première ouverture (10) de la surface enveloppante, configurée pour permettre le passage de l'air entre l'extérieur de la surface enveloppante (3) et l'espace intérieur situé entre la surface enveloppante (3) et le mannequin (2) ;
- un moyen de positionnement d'un masque (1) en correspondance avec la position avant (22) du mannequin (2), configuré pour positionner le masque (1) en correspondance avec la position avant (22) du mannequin (2) sans produire de fermeture étanche à l'air entre le masque (1) et le mannequin (2) ;
et comprenant en outre :
- un deuxième conduit d'air (8) configuré pour être connecté au masque (1) en correspondance avec une surface extérieure du masque (1) opposée au mannequin (2) par l'intermédiaire d'un moyen de couplage (9), le moyen de couplage (9) étant imperméable à l'air et étant configuré pour être scellé à un bord périmétrique de la surface extérieure du masque (1) et à une surface extérieure du deuxième conduit d'air (8) située en correspondance avec une première extrémité du deuxième conduit d'air (8), le moyen de couplage (9) générant une cavité entre le masque (1), le moyen de couplage (9) et une entrée d'air située en correspondance avec la première extrémité du deuxième conduit d'air (8) ;
- un deuxième capteur de débit (7) connecté au deuxième conduit d'air (8) et configuré pour mesurer le débit d'air d'inspiration et/ou d'expiration qui est filtré par le masque (1), et ;
- des moyens de calcul configurés pour calculer un coefficient de filtration (Ke).

2. Dispositif de mesure de l'efficacité de filtration d'un masque (1) selon la revendication 1, dans lequel les moyens de calcul sont configurés pour calculer le coefficient de filtration (Ke) en divisant le débit d'air d'inspiration et/ou d'expiration qui est filtré par le masque par le débit du flux d'air d'inspiration et/ou d'expiration produit par le moyen de pompage.

3. Dispositif de mesure de l'efficacité de filtration d'un masque (1) selon la revendication 1 ou dans lequel il comprend un troisième capteur de débit (11) configuré pour mesurer le débit d'air s'écoulant à travers la première ouverture (10) de la surface enveloppante (3).

4. Dispositif de mesure de l'efficacité de filtration d'un masque (1) selon l'une quelconque des revendications précédentes, dans lequel le moyen de couplage (9) comprend un film de matériau imperméable à l'air.

5. Dispositif de mesure de l'efficacité de filtration d'un masque (1) selon l'une quelconque des revendications précédentes, dans lequel la surface enveloppante (3) est une urne ou une cagoule chirurgicale.

6. Dispositif de mesure de l'efficacité de filtration d'un masque (1) selon la revendication 5, dans lequel il comprend un support du deuxième conduit d'air (8) sur la surface enveloppante (3).

7. Dispositif de mesure de l'efficacité de filtration d'un masque (1) selon l'une quelconque des revendications précédentes, dans lequel le moyen de pompage (4) est configuré de manière réglable pour pouvoir faire varier le débit et la fréquence d'inspiration et d'expiration.

8. Dispositif de mesure de l'efficacité de filtration d'un masque (1) selon la revendication 7, dans lequel le moyen de pompage (4) peut être régulé en fonction d'au moins quatre rythmes respiratoires correspondant à un niveau de repos, un niveau d'exercice physique léger, un niveau d'exercice physique modéré et un niveau d'exercice physique intense.

9. Dispositif de mesure de l'efficacité de filtration d'un masque (1) selon l'une quelconque des revendications précédentes, dans lequel il comprend un manomètre à air (13) situé en correspondance avec un orifice du premier conduit d'air (6).
